# NEUE EUROPÄISCHE PATENTSCHRIFT

(11) **EP 0 673 701 B2**
(45) Veröffentlichungstag und Bekanntmachung des Hinweises auf die Entscheidung über den Einspruch: **18.06.2003**
(45) Hinweis auf die Patenterteilung: 17.09.1997
(21) Anmeldenummer: 95100746.7
(22) Anmeldetag: 20.01.1995
(51) Int. Cl.: B23D 77/04

(54) **Reibahle**
Reamer
Alésoir

(30) Priorität: 23.02.1994 DE 4405750
(43) Veröffentlichungstag der Anmeldung: 27.09.1995
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(56) Entgegenhaltungen:
- DE-A- 3 924 996
- DE-A- 4 012 243
- DE-A- 4 102 716
- DE-A- 4 115 317
- DE-C- 3 924 998
- DE-C- 4 007 175
- DE-C- 4 405 750
- DE-U- 6 924 272
- US-A- 4 125 342
- US-A- 4 344 724
- US-E- R E34 054
- Mapal-Prospekt "NC-Werkzeuge für die flexible Fertigung" Deckblatt, Seite 3 Rückseite

## Beschreibung

Die Erfindung betrifft eine Reibahle mit mindestens einer Messerplatte gemäß Oberbegriff des Anspruchs 1.

Reibahlen dienen der Feinbearbeitung von Bohrungsoberflächen. Sie weisen mindestens eine Messerplatte und zwei Führungsleisten auf, über die sich die Reibahle in der zu bearbeitenden Bohrung abstützt. Ein Werkzeug dieser Art ist aus der deutschen Patentschrift Nr. 26 14 599 bekannt.

Es hat sich herausgestellt, daß bei der Bearbeitung von Bohrungen während des ersten Einsatzes der Reibahle eine Setzbewegung der Messerplatte stattfindet. Es bedarf daher, insbesondere bei der Vorgabe von engen Maßtoleranzen, einer Nachstellung des Außendurchmessers der Reibahle.

Es ist daher Aufgabe der Erfindung, eine Reibahle zu schaffen, die diese Nachteile nicht aufweist.

Diese Aufgabe wird bei einer Reibahle gemäß Oberbegriff des Anspruchs 1 mit Hilfe der in diesem Anspruch genannten Merkmale gelöst. Dadurch, daß die Flanken der auf der Vorderseite der Messerplatte eingebrachten Spannkerbe mit der Vorderseite der Messerplatte einen Winkel von 10° einschließen, ergeben sich sehr hohe Einspannkräfte, mit denen die Messerplatte in der Reibahle befestigt wird. Die bei der ersten Bearbeitung einer Bohrung auftretenden Kräfte bewirken daher praktisch keinerlei Verlagerung der Messerplatte mehr, so daß Setzbewegungen vermieden werden. Der eingestellte Bearbeitungsdurchmesser der Reibahle wird daher auch beim weiteren Einsatz des Werkzeuges eingehalten.

Bevorzugt wird ein Ausführungsbeispiel der Reibahle, bei der auf der Vorderseite der Messerplatte entlang der Seitenkante der Spannkerbe verlaufende erste Stützflächen vorgesehen sind. Diese dienen dazu, die Messerplatte optimal in der Nut zu halten, die in den Grundkörper der Reibahle eingebracht ist, so daß sich auch dadurch besonders hohe. Oberflächenqualitäten und enge Maßtoleranzen bei der Bearbeitung von Bohrungen einstellen.

Weiterhin wird ein Ausführungsbeispiel der Reibahle bevorzugt, bei der die Länge der in die Messerplatte eingebrachten Spannkerbe kleiner ist als die Länge der Messerplatte, so daß an der Stirnseite der Spannkerbe weitere Stützflächen ausgebildet sind. Auch diese dienen dazu, der Messerplatte in der zugehörigen Nut in der Reibahle optimalen Halt zu gewähren und damit besonders gute Feinbearbeitungsqualitäten zu erzielen.

Weiterhin wird eine Ausführungsform der Reibahle bevorzugt, bei der die Spannkerbe gegenüber der im Bereich der Stirnseite der Spannkerbe angeordneten Stützflächen durch einen senkrecht zur Vorderseite der Messerplatte verlaufenden Absatz begrenzt wird. Die die Messerplatte haltende Spannpratze kann daher quasi in der Vorderseite der Messerplatte versenkt angeordnet werden, so daß Späne nicht seitlich unter die Spannpratze gelangen und sich dort verfangen können. Derartige Späne werden bei der Bearbeitung von Bohrungen mitgerissen und können zu Riefen in der Oberfläche der zu bearbeitenden Bohrung aber auch zu Maßabweichungen führen, wenn die Späne zwischen die Führungsleisten und die Bohrungswandung gelangen.

Bei einer weiteren bevorzugten Ausführungsform der Reibahle ist die Länge der Spannkerbe so auf die Breite der mit dieser zusammenwirkenden Spannpratze abgestimmt, daß nur ein geringes seitliches Spiel gegeben ist. Einerseits läßt sich dadurch die Spannpratze leicht in die Spannkerbe einbringen, andererseits wird vermieden, daß Späne unter die Spannpratze gelangen können.

Bei einem weiteren bevorzugten Ausführungsbeispiel der Reibahle werden die Flanken der Spannkerbe von einer im wesentlichen parallel zu deren Seitenkanten verlaufenden Stufe begrenzt. Auch dies führt dazu, daß die Spannpratze quasi in die Oberfläche der Messerplatte versenkt angeordnet werden kann und somit das Eindringen von Verschmutzungen, insbesondere von Spanresten vermieden wird.

Besonders bevorzugt wird eine Ausführungsform der Reibahle, die sich dadurch auszeichnet, daß die Messerplatte mittels eines Erosionsverfahrens herstellbar ist. Dieses Verfahren ist relativ preiswert durchführbar.

Weitere Ausgestaltungen der Reibahle ergeben sich aus den übrigen Unteransprüchen.

Die Erfindung wird im folgenden anhand der Zeichnungen näher erläutert. Es zeigen:
- Figur 1: eine Draufsicht auf die Vorderseite einer Messerplatte;
- Figur 2: einen Querschnitt entlang der in Figur 1 dargestellten Linie II-II;
- Figur 3: eine weitere Draufsicht auf die Vorderseite einer Messerplatte, bei der eine Spannpratze angedeutet ist und
- Figur 4: einen weiteren Querschnitt gemäß Figur 2, bei dem die Anordnung einer Spannpratze ersichtlich ist.

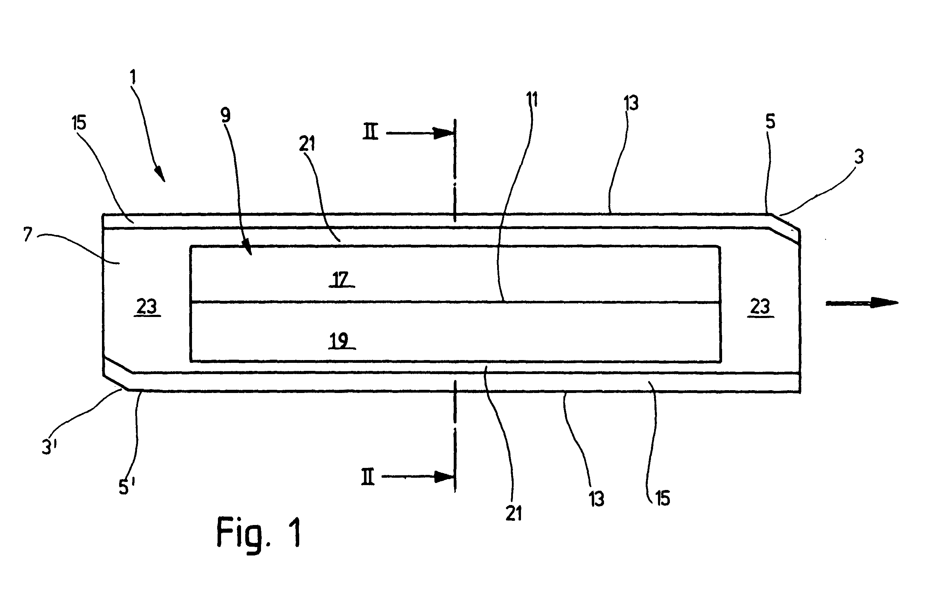

Aus Figur 1 ist eine Messerplatte 1 ersichtlich, die hier im wesentlichen rechteckförmig ausgebildet ist. An ihrer rechten oberen Ecke ist eine Abschrägung erkennbar. Die hier gegebene Seitenkante dient als aktive Hauptschneide 3, die bei der Bearbeitung einer Bohrung Späne von der Bohrungswandung abträgt. An die Hauptschneide 3 grenzt eine Nebenschneide 5 an, die entgegen der durch einen Doppelpfeil angedeuteten Vorschubrichtung geneigt ist. Die Neigung ist allerdings so gering, daß sie bei dieser eher skizzenhaften Darstellung nicht ersichtlich ist.

In Figur 1 ist eine sogenannte Wendeplatte dargestellt. Das heißt, der aktiven Hauptschneide 3 gegenüberliegend ist eine weitere Hauptschneide 3' vorgesehen, die ihrerseits in eine zugehörige Nebenschneide 5' übergeht. Bei einem Verschleiß der aktiven Schneiden können die Hauptschneide 3' und die Nebenschneide 5' nach einer Drehung der Messerplatte 1 um 180° eingesetzt werden.

In die Vorderseite 7 der Messerplatte 1 ist eine Spannkerbe 9 eingebracht, die im wesentlichen V-förmig und symmetrisch ausgebildet ist, so daß ihre Mittellinie 11 parallel zu Seitenkanten 13 der Messerplatte 1 und etwa mittig zwischen diesen angeordnet ist.

Parallel zu den Seitenkanten 13 der Messerplatte 1 sind überdies Spanleitflächen 15 erkennbar, die dazu dienen, die von den aktiven Schneiden abgetragenen Späne zu leiten und zu brechen.

Aus der Draufsicht ist erkennbar, daß Flanken 17 und 19 der Spannkerbe 9 in einem Abstand zu den Seitenkanten 13 und in einem Abstand zu den Spanleitflächen 15 enden, so daß entlang der Längskanten der Spannkerbe 9 verlaufende erste Stützflächen 21 gebildet werden, die hier als durchgehende Flächenstreifen ausgebildet sind.

Die Länge der Spannkerbe 9 ist kleiner als die Länge der Messerplatte 1, so daß zumindest an einer Stirnseite der Spannkerbe 9, hier an deren beiden Stirnseiten eine zweite Stützfläche 23 ausgebildet wird. Bei dem hier dargestellten Ausführungsbeispiel ist die Spannkerbe 9 also etwa mittig auf der Vorderseite 7 der Messerplatte 1 angeordnet, so daß die ersten Stützflächen 21 und die zweiten Stützflächen 23 symmetrisch zueinander angeordnet sind.

Die Breite der zweiten Stützflächen 23 ist so gewählt, daß sie sich zumindest über den Bereich der Hauptschneide 3 beziehungsweise 3' erstrecken. Vorzugsweise sind die zweiten Stützflächen 23 so breit ausgebildet, daß sie sich zumindest über einen Bereich der Nebenschneide 5 beziehungsweise 5' erstrecken. Dadurch werden die von der aktiven Schneide von der Bohrungswandung abgetragenen Späne optimal geführt, das heißt, sie können auf der ebenen Fläche auf der Vorderseite 7 der Messerplatte 1 ungehindert ablaufen.

Die in Figur 1 dargestellte Messerplatte 1 ist rechteckförmig ausgebildet, ebenso die auf deren Vorderseite 7 vorgesehene Spannkerbe 9. Es ist grundsätzlich auch möglich, die Messerplatte 1 im wesentlichen quadratisch auszubilden und entsprechend die Spannkerbe 9 als quadratische Vertiefung auf der Vorderseite dieser Messerplatte auszubilden. Denkbar ist es auch, die Messerplatte als Vieleck zu gestalten und jeweils einer Seitenkante eine entsprechende Spannkerbe zuzuordnen.

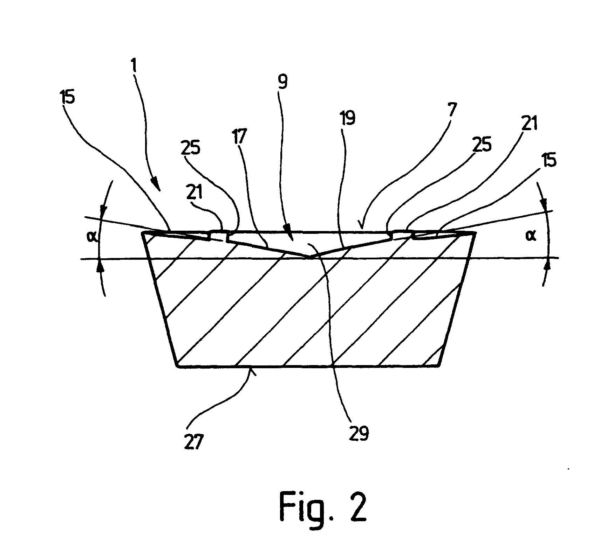

Der in Figur 2 gezeigte, entlang der -in Figur 1 dargestellten- Linie II-II verlaufende Querschnitt durch die Messerplatte 1 läßt Einzelheiten der Spannkerbe 9 besser erkennen. Gleiche Teile sind mit gleichen Bezugszeichen versehen, so daß auf deren ausführliche Beschreibung hier verzichtet werden kann. eingeleitet werden, in dem die Spannkerbe 9 vorgesehen ist. Der Eingriffsbereich E1 kann so gewählt beziehungsweise ausgerichtet werden, daß er sich zu ca. 50% über den Bereich der zweiten Stutzfläche 23 und zu ca. 50% über dem Bereich der Spannkerbe 9 erstreckt. Auf diese Weise ist sichergestellt, daß die Messerplatte 1 optimal durch die in die Spannkerbe 9 eingeleiteten Spannkräfte der Spannpratze 31 gegen die Stellmittel gepreßt wird. Andererseits können die Stellmittel die über die aktive Hauptschneide 3 beziehungsweise die aktive Nebenschneide 5 eingeleiteten Kräfte abfangen.

Auf der diametral gegenüberliegenden Kante der Messerplatte 1, also im Bereich der inaktiven Hauptschneide 3' beziehungsweise der inaktiven Nebenschneide 5' sind die Stellmittel so angeordnet, daß die Stellkräfte in den Eingriffsbereich E2 eingeleitet werden. Der Eingriffsbereich E2 wird vorzugsweise so gewählt, daß er sich zu ca. 50% über den Bereich der Spannkerbe 9 erstreckt. Auf diese Weise werden die Spannkräfte optimal abgefangen und eine Durchbiegung der Messerplatte 1 durch die Spannkräfte auf ein Minimum reduziert. Denkbar ist es auch, insbesondere bei geringeren Spannkräften oder dickeren Messerplatten, den Eingriffsbereich E2 in einem Bereich der Messerplatte 1 zu positionieren, der seitlich neben der Spannkerbe 9 angeordnet ist.

Dadurch, daß die Breite der zweiten Stützfläche 23 so gewählt ist, daß sich diese über den Bereich der aktiven Hauptschneide 3 sowie der aktiven Nebenschneide 5 erstreckt, ist eine hohe Stabilisierung der Messerplatte 1 gegeben. Die in den Grundkörper der Messerplatte 1 eingeleiteten Kräfte werden durch die in dem Bereich E1 vorgesehenen Stellmittel optimal aufgefangen, ohne daß es zu einer Durchbiegung der Messerplatte 1 und damit zu einer Veränderung des Außendurchmessers der Reibahle kommt.

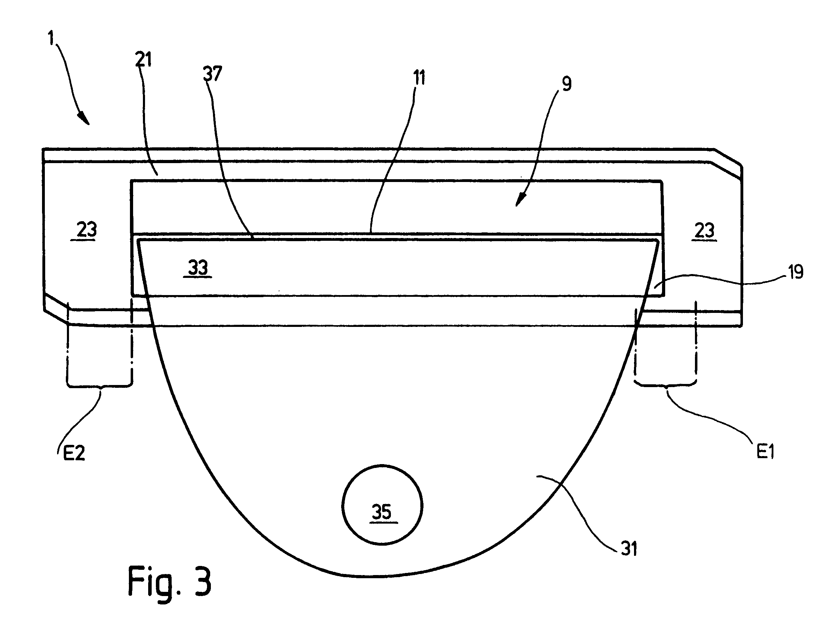

Aus Figur 3 ist ersichtlich, daß die Breite der Spannpratze 31 beziehungsweise der mit der Messerplatte 1 zusammenwirkenden Spannlippe 33 auf die Breite der Spannkerbe 9 so abgestimmt ist, daß seitlich praktisch kein Spiel neben der Spannpratze 31 gegeben ist. Von den aktiven Schneiden abgetragene Späne können daher nicht unter die Spannlippe 33 geraten und sich dort verfangen. Derartige Späne können abbrechen und weitere, nachkommende Späne mitreißen, so daß einerseits Riefen in der Bohrungsoberfläche entstehen können. Andererseits ist es möglich, daß derartige Späne zwischen die Bohrungswandung und die Führungsleisten der Reibahle gelangen und dadurch den durch die aktive Schneide und die Oberflächen der Führungsleisten gegebenen Außendurchmesser der Reibahle verändern.

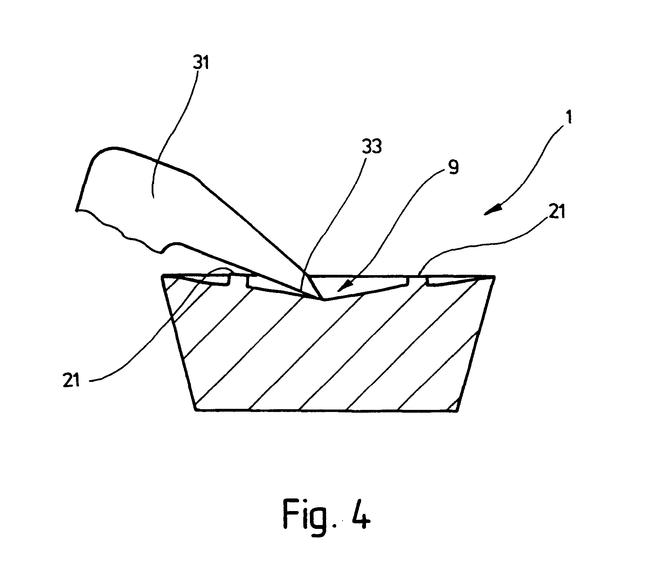

In Figur 4 ist dargestellt, wie die Spannlippe 33 der Spannpratze 31 in die Spannkerbe 9 eingreift. Es zeigt sich bei dieser Darstellung besonders deutlich, daß die Spannkerbe 9 quasi versenkt in der Oberfläche 7 der Messerplatte 1 angeordnet ist, und daß die Stufen 25 die versenkte Anordnung der Spannlippe 33 in der

Die in die Vorderseite 7 der Messerplatte 1 eingebrachte Spannkerbe 9 ist, wie gesagt, V-förmig ausgebildet. Die Flanken 17 und 19 enden jeweils in einer Stufe 25. Die Spannkerbe 9 ist also quasi vertiert in die Vorderseite 7 der Messerplatte 1 eingebracht. Aus der Darstellung gemäß Figur 2 ist ersichtlich, daß zwischen der Spannkerbe 9 und den Spanleitflächen 15 die ersten Stützflächen 21 verlaufen.

Die Breite der Messerplatte 1 ist auf deren Vorderseite 7 etwas größer als auf deren Rückseite 27. Insgesamt zeigt sich, daß die Messerplatte 1 im Querschnitt im wesentlichen trapezförmig ausgebildet ist

Aus der Darstellung gemäß Figur 2 ist schließlich noch ersichtlich, daß die Spannkerbe 9 an ihren Stirnflächen einen Absatz 29 aufweist, der gegenüber der Vorderseite 7 der Messerplatte 1 senkrecht zur Spannkerbe 9 abfällt.

In Figur 2 ist angedeutet, daß die Flanken 17 und 19 der Spannkerbe 9 gegenüber der parallel zur Vorderseite 7 der Messerplatte 1 verlaufenden Horizontalen einen Winkel α einschließen. Durch diese Ausgestaltung werden, wie unten noch näher erläutert, optimale Spannkräfte aufgebaut. Es hat sich herausgestellt, daß ein Winkel α von 10° optimal ist

In Figur 3 ist wiederum eine Draufsicht auf die Messerplatte 1 gemäß Figur 1 dargestellt Zusätzlich ist hier angedeutet, wie eine Spannpratze 31 in die Spannkerbe 9 eingreift. Die Spannpratze 31 kann mit einer Spannlippe 33 versehen sein und mit einem Durchgangsloch 35, durch das eine Spannschraube hindurchgreift, die in den Grundkörper einer Reibahle festgeschraubt wird.

Eine äußerste kante 37 der Spannpratze 31 beziehungsweise ihrer Spannlippe 33 verläuft in unmittelbarer Nähe zur Mittellinie 11 der Spannkerbe 9. Die Flanke 19 wird von der Unterseite der Spannlippe 33 quasi linienförmig berührt.

Sollte die als Wendeplatte ausgebildete Messerplatte 1 nach einem Verschleiß der Hauptschneide 3 beziehungsweise Hebenschneide 5 um 180° gedreht werden, greift die Spannlippe 33 entsprechend an der Flanke 17 der Spannkerbe 9 ein.

Die Reibahle ist mit Stellmitteln ausgestallet, die dazu dienen, den Überstand der Messerplatte 1 über die Umfangsfläche der Reibahle einzustellen und damit den Außendurchmesser des Werkzeugs. Derartige Stellmittel sind bekannt. Sie weisen beispielsweise eine Stellschraube und einen Stellkeil auf. In Figur 3 wird davon ausgegangen, daß jeweils zwei Stellkeile auf die Seitenfläche der Messerplatte 1 einwirken. Die Eingriffsbereiche E1 und E2 sind in Figur 3 angedeutet.

Vorzugsweise werden die Stellmittel so angeordnet, daß im Bereich der aktiven Schneiden, der Hauptschneide 3 und der Nebenschneide 5, die Stellkräfte so in die Seitenfläche der Messerplatte 1 eingeleitet werden, daß diese einerseits in die zweite Stützfläche 23 und andererseits in einen Bereich der Messerplatte 1 Spannkerbe 9 ermöglichen, so daß über die gesamte Länge der Unterseite der Spannlippe 33 ein Schutz gegen Eindringen von Spänen und Spanteilen gewährleistet ist.

Insgesamt ist folgendes festzuhalten:
Durch die Ausgestaltung der Spannkerbe 9 wird einerseits gewährleistet, daß die Messerplatte 1 mit hohen Spannkräften beaufschlagt wird, die die Messerplatte 1 in das Innere einer Nut preßt, die der Aufnahme der Messerplatte 1 dient und die in die Umfangswandung der Reibahle eingebracht ist. Durch diese hohen Spannkräfte wird die Messerplatte 1 so gegen den Nutgrund und gegen gegebenenfalls vorgesehene Stellmittel gepreßt, daß beim ersten Einsatz der Reibahle eine Setzbewegung der Messerplatte 1 praktisch ausgeschlossen ist. Es bedarf daher keiner Justagearbeiten, um derartige Setzbewegungen auszugleichen.

Darüber hinaus ist die Spannkerbe 9 rundum durch die in Längsrichtung verlaufenden Stufen 25 und durch die seitlichen Absätze 29 gegen das Eindringen von Spänen geschützt, daß ein glatter Spanablauf gewährleistet ist und Beeinträchtigungen der Feinbearbeitung mit Hilfe der Reibahle durch mitgerissene Späne praktisch vollständig ausgeschlossen werden können.

Bei einem Einsatz der Reibahle bis hin zu einer Hochgeschwindigkeitsbearbeitung von Bohrungsoberflächen ist gewährleistet, daß die Messerplatte 1 sicher gehalten wird. Durch die entlang der Längskanten der Spannkerbe 9 verlaufenden ersten Stützflächen 21, von denen jeweils die der aktiven Schneide, Hauptschneide 3 und Nebenschneide 5, gegenüberliegende Stützfläche, wird ein sicherer Halt der Messerplatte 1 in der zugehörigen Nut im Grundkörper der Reibahle gewährleistet. Zusätzlich wird eine gute Anlage an der Innenseite der Nutwandung der Messerplatte 1 durch die an den Stirnseiten der Spannkerbe 9 vorgesehenen zweiten Stützflächen 23 gewährleistet. Die auf diese Weise sicher gehaltene Messerplatte 1 wird relativ geringen Vibrationen unterworfen, so daß im Zusammenspiel mit der optimalen Festspannung Setzbewegungen mit hoher Sicherheit vermieden werden.

Messerplatten der hier beschriebenen Art können einerseits mittels eines Sinterverfahrens, andererseits mittels eines Erosionsverfahrens hergestellt werden. In beiden Fällen ergeben sich die, durch die allseits abgeschlossene Spannkerbe gegebenen, oben beschriebenen Vorteile.

## Patentansprüche

1. Reibahle mit mindestens einer im Querschnitt im Wesentlichen trapezfirming ausgebildeten, in eine Nut in des Reibahle eingesetzlen Messerplatte (1), die auf ihrer Vorderseite mit einer durchgehenden, im wesentlichen V-förmigen Spannkerbe (9) versehen ist, in die eine Spannpratze (31) zur Befestigung der Messer-platte (1) eingreift, die die Messerplatte gegen den Nutgrund und gegen auf eine Seitenfläche des Messerplatte wirkende Stellmittel preßt und die eine Spannlippe (33) aufweist, deren äußerste Kante (37) in unmittelbaren Nähe zur Mittellinie (11) des Spannkerbe (9) verläuft, wobei die Unterseite der Spannlippe eine Flanke (19) der Spannkerbe (9) quasi linienförmig bevöhrt,und mit Stellmitteln, mittels derer der Überstand der Messplatte (1) über die Umfangsfläche der Reibahle einstellbar ist, **dadurch gekennzeichnet, dass** die Flanken (17, 19) der Spannkerbe (9) in einer gedachten Ebene, die mit der Vorderseite (7) der Messplatte (1) zusammenfällt, jeweils einen Winkel α von 10° einschließen.

2. Reibahle nach Anspruch 1, **dadurch gekennzeichnet, daß** die Spannkerbe (9) symmetrisch ausgebildet ist und daß ihre Mittellinie (11) parallel zu den Seitenkanten (13) der Messerplatte (1) verläuft und mittig zwischen diesen angeordnet ist.

3. Reibahle nach Anspruch 1 oder 2, **dadurch gekennzeichnet, daß** auf der Vorderseite (7) der Messerplatte (1) entlang der Seitenkanten der Spannkerbe (9) verlaufende erste Stützflächen (21) vorgesehen sind.

4. Reibahle nach Anspruch 3, **dadurch gekennzeichnet, daß** die ersten Stützflächen (21) als durchgehende Flächenstreifen ausgebildet sind.

5. Reibahle nach einem der vorhergehenden Ansprüche, **dadurch gekennzeichnet, daß** die Länge der Spannkerbe (9) kleiner ist als die Länge der Messerplatte (1), so daß an zumindest einer Stirnseite der Spannkerbe (9) eine zweite Stützfläche (23) ausgebildet ist.

6. Reibahle nach Anspruch 5, **dadurch gekennzeichnet, daß** die Spannkerbe (9) etwa mittig auf der Vorderseite (7) der Messerplatte (1) angeordnet ist, so daß an beiden Stirnseiten der Spannkerbe (9) zweite Stützflächen (23) ausgebildet sind.

7. Reibahle nach Anspruch 5 oder 6, **dadurch gekennzeichnet, daß** die Messerplatte (1) rechteckig ausgebildet ist, daß Bereiche ihrer Längskanten (13) als Hauptschneide (3, 3') und Nebenschneide (5, 5') dienen und daß die Breite der zweiten Stützfläche (23) so gewählt ist, daß sich diese zumindest über den Bereich der Hauptschneide (3, 3'), vorzugsweise auch noch über einen Bereich der Nebenschneide (5, 5') erstreckt.

8. Reibahle nach einem der Ansprüche 5 bis 7, **dadurch gekennzeichnet, daß** die Spannkerbe (9) gegenüber der zweiten Stützfläche (23) durch einen senkrecht zur Vorderseite (7) der Messerplatte (1) verlaufenden Absatz (29) begrenzt wird.

9. Reibahle nach einem der vorhergehenden Ansprüche, **dadurch gekennzeichnet, daß** die Länge der Spannkerbe (9) so auf die Breite der mit dieser zusammenwirkenden Spannpratze (31) abgestimmt ist, daß ein nur geringes seitliches Spiel gegeben ist

10. Reibahle nach einem der vorhergehenden Ansprüche, **dadurch gekennzeichnet, daß** die Flanken (17, 19) der Spannkerbe (9) von einer im wesentlichen parallel zu deren Seitenkanten verlaufenden Stufe (25) begrenzt werden.

11. Reibahle nach einem der vorhergehenden Ansprüche, **dadurch gekennzeichnet, daß** die Messerplatte (1) als Wendeplatte ausgebildet ist, und daß zwei diametral gegenüberliegenden Bereiche ihrer Seitenkanten (13) als Hauptschneide (3, 3') und Nebenschneide (5,5') dienen.

12. Reibahle nach einem der vorhergehenden Ansprüche, **dadurch gekennzeichnet, daß** die Stellmittel auf einen der aktiven Hauptschneide (3) und Nebenschneide (5) gegenüberliegenden Bereich (E1) der Seitenkante (13) der Messerplatte (1) einwirken und so angeordnet sind, daß die Stellkräfte zumindest in einen Bereich der Messerplatte (1) eingeleitet werden, in dem diese die Spannkerbe (9) aufweist.

13. Reibahle nach Anspruch 12, **dadurch gekennzeichnet, daß** etwa die Hälfte der Stellkräfte in einem Bereich (E1) der Messerplatte (1) eingeleitet werden, in dem diese mit der Spannkerbe (9) versehen ist, und die übrigen Stellkräfte in einen Bereich der Messerplatte (1) eingeleitet werden, in dem diese mit der zweiten Stützfläche (23) versehen ist

14. Reibahle nach Anspruch 12 oder 13, **dadurch gekennzeichnet, daß** die Stellmittel auf einen Seitenbereich der Messerplatte (1) wirken, der diametral der aktiven Hauptschneide (3) und der aktiven Nebenschneide (5) gegenüberliegt, und daß die Stellkräfte in einen Bereich (E2) der Messerplatte (1) eingeleitet werden, der zum Teil oder vollständig seitlich neben der Spannkerbe (9) angeordnet ist.

15. Reibahle nach einem der vorhergehenden Ansprüche, **dadurch gekennzeichnet, daß** die Messerplatte (1) mittels eines Sinterverfahrens hergestellt ist.

16. Reibahle nach einem der Ansprüche 1 bis 14, **dadurch gekennzeichnet, daß** die Messerplatte (1) mittels eines Erosionsverfahrens hergestellt ist.

## Claims

1. A reamer comprising at least one blade insert (1) which is shaped substantially trapezoidal in cross-section and is inserted into a groove in the reamer, which blade insert is provided on its front side with a continuous, substantially V-shape clamping notch (9) into which a clamping shoe (31) engages to secure the blade insert (1), which clamping shoe presses the blade insert against the base of the groove and against adjusting means acting on a side surface of the blade insert, and has a clamping lip (33), the outermost edge (37) of which extends in immediate proximity to the centre line (11) of the clamping notch (9), the underside of the clamping lip touching a side (19) of the clamping notch (9) quasi linearly, and comprising adjusting means by means of which the projecting length of the blade insert (1) beyond the peripheral surface of the reamer is adjustable, **characterised in that** the sides (17, 19) of the clamping notch (9) each form an angle α of 10° to an imaginary plane which coincides with the front side (7) of the blade insert (1).

2. A reamer according to claim 1, **characterised in that** the clamping notch (9) is made symmetrical, and **in that** its centre line (11) extends parallel to the side edges (13) of the blade insert (1) and is positioned centrally therebetween.

3. A reamer according to claim 1 or 2, **characterised in that** first supporting surfaces (21), extending along the side edges of the clamping notch (9), are provided on the front side (7) of the blade insert (1).

4. A reamer according to claim 3, **characterised in that** the first supporting surfaces (21) are continuous surface strips.

5. A reamer according to one of the preceding claims, **characterised in that** the length of the clamping notch (9) is less than the length of the blade insert (1), so that a second supporting surface (23) is created on at least one end face of the clamping notch (9).

6. A reamer according to claim 5, **characterised in that** the clamping notch (9) is positioned approximately centrally on the front side (7) of the blade insert (1), so that second supporting surfaces (23) are created on the two end faces of the clamping notch (9).

7. A reamer according to claim 5 or 6, **characterised in that** the blade insert (1) is made rectangular, **in that** regions of its longitudinal edges (13) serve as primary cutter (3, 3') and secondary cutter (5, 5'), and **in that** the width of the second supporting surface (23) is selected such that it extends at least over the region of the primary cutter (3, 3'), preferably also over a region of the secondary cutter (5, 5').

8. A reamer according to one of claims 5 to 7, **characterised in that** the clamping notch (9) is delimited from the second supporting surface (23) by an offset (29) which extends perpendicularly to the front side (7) of the blade insert (1).

9. A reamer according to one of the preceding claims, **characterised in that** the length of the clamping notch (9) is adapted to the width of the clamping shoe (31) cooperating therewith such that there is only slight lateral clearance.

10. A reamer according to one of the preceding claims, **characterised in that** the sides (17, 19) of the clamping notch (9) are delimited by a step (25) extending substantially parallel to the side edges thereof.

11. A reamer according to one of the preceding claims, **characterised in that** the blade insert (1) is a reversible insert, and **in that** two diametrically opposite regions of its side edges (13) serve as primary cutter (3, 3') and secondary cutter (5, 5').

12. A reamer according to one of the preceding claims, **characterised in that** the adjusting means act on a region (E1) of the side edge (13) of the blade insert (1) located opposite the active primary cutter (3) and the secondary cutter (5) and are positioned such that the adjusting forces are directed at least into a region of the blade insert (1) in which the clamping notch (9) is provided.

13. A reamer according to claim 12, **characterised in that** approximately half of the adjusting forces are directed into a region (E1) of the blade insert (1) in which the clamping notch (9) is provided, and the remaining adjusting forces are directed into a region of the blade insert (1) in which the second supporting surface (23) is provided.

14. A reamer according to claim 12 or 13, **characterised in that** the adjusting means act on a side region of the blade insert (1) which is diametrically opposite the active primary cutter (3) and the active secondary cutter (5), and **in that** the adjusting forces are directed into a region (E2) of the blade insert (1) which is located partially or completely laterally adjacent to the clamping notch (9).

15. A reamer according to one of the preceding claims, **characterised in that** the blade insert (1) is manufactured by means of a sintering process.

16. A reamer according to one of claims 1 to 14, **characterised in that** the blade insert (1) is manufactured by means of an erosion process.

## Revendications

1. Alésoir équipé d'au moins une plaquette de coupe (1) de section essentiellement trapézoïdale placée dans une rainure de l'alésoir, portant sur sa face avant une encoche de serrage (9), continue et essentiellement en forme de V, dans laquelle est en prise une griffe de serrage (31) servant à fixer la plaquette de coupe (1), qui presse la plaquette de coupe contre le fond de la rainure et contre un organe de réglage agissant contre une surface latérale de la plaquette de coupe, et qui comporte une lèvre de serrage (33) dont le bord du plan externe (37) passe à proximité immédiate de la ligne d'axe (11) de l'encoche de serrage (9), le côté intérieure de la lèvre de serrage touchant un flanc (19) de l'encoche de serrage (9) suivant un contact quasi linéaire, l'alésoir comportant des moyens de réglage à l'aide desquels on règle le dépassement de la plaque de coupe (1) par rapport à la surface périphérique de l'alésoir **caractérisé en ce que** les flancs (17, 19) de l'encoche de serrage (9) sont situés chacun dans un plan faisant avec le plan de la face avant (7) de la plaquette de coupe (1) un angle α de 10°.

2. Alésoir selon la revendication 1, **caractérisé en ce que** l'encoche (9) est symétrique, sa ligne médiane (11) étant parallèle aux bords latéraux (13) de la plaquette de coupe (1) et à mi-distance de ceux-ci.

3. Alésoir selon la revendication 1 ou 2, **caractérisé en ce que** la face avant (7) de la plaquette de coupe (1) présente des premières portées d'appui (21) le long de chacun des bords latéraux de l'encoche (9).

4. Alésoir selon la revendication 1, **caractérisé en ce que** les premières portées d'appui (21) sont des bandes continues.

5. Alésoir selon une des revendications précédentes **caractérisé en ce que** la longueur de l'encoche (9) est plus petite que celle de la plaquette de coupe (1), de sorte qu'il existe, au moins le long d'une face frontale de l'encoche (9), une seconde portée d'appui (23).

6. Alésoir selon la revendication 5, **caractérisé en ce que** l'encoche de serrage (9) est disposée sensiblement au milieu de la face avant (7) de la plaquette de coupe (1) de sorte qu'il existe deux secondes portées d'appui (23) le long des deux faces frontales de l'encoche (9).

7. Alésoir selon les revendications 5 ou 6, **caractérisé en ce que** la plaquette de coupe (1) est rectangulaire, les zones situées le long de ses bords longitudinaux (13) jouant le rôle d'arêtes de coupe principales (3, 3') et auxiliaires (5, 5') tandis que la largeur de la seconde portée d'appui (23) est choisi de manière qu'elle corresponde au moins à toute l'étendue de l'arête principale (3, 3') et de préférence aussi à une partie de l'arête auxiliaire (5, 5').

8. Alésoir selon une des revendications 5 à 7, **caractérisé en ce que** l'encoche de serrage (9) est, par rapport à la seconde portée d'appui (23), délimitée par une paroi (29) perpendiculaire à la face avant (7) de la plaquette de coupe (1).

9. Alésoir selon une des revendications précédentes, **caractérisé en ce que** la longueur de l'encoche de serrage (9) est adaptée à la largueur de la pince de serrage (31) associée à l'encoche de manière à ne laisser qu'un faible jeu latéral.

10. Alésoir selon une des revendications précédentes, **caractérisé en ce que** les flancs (17, 19) de l'encoche de serrage (9) sont délimités par un gradin (25) sensiblement parallèle aux bords latéraux de l'encoche.

11. Alésoir selon une des revendications précédentes, **caractérisé en ce que** la plaquette de coupe (1) est réalisée sous forme de plaque réversible, deux zones diamétralement opposées de leurs bord latéraux (13) servant d'arêtes principales de coupe (3, 3') et d'arêtes auxiliaires de coupe (5, 5').

12. Alésoir selon une des revendications précédentes, **caractérisé en ce que** les moyens de réglage agissent sur une partie (E1) du bord latéral (13) située en face des arêtes actives principale (3) et auxiliaire (5), et sont placés de manière que les forces de réglage soient introduites au moins dans une zone de la plaquette de coupe (1) où se trouve l'encoche de serrage (9).

13. Alésoir selon la revendication 12, **caractérisé en ce que** la moitié des forces de serrage sont introduites dans une zone (E1) de la plaquette (1) où celle-ci présente l'encoche (9), tandis que les forces restantes sont introduites dans une zone de la plaquette de coupe (1) où celle-ci présente la seconde portée d'appui (23).

14. Alésoir selon la revendication 12 ou 13, **caractérisé en ce que** les moyens de réglage agissent sur une partie latérale de la plaquette de coupe (1) diamétralement opposée aux arêtes actives principale (3) et auxiliaire (5), les forces de serrage étant introduites dans une zone (E2) de la plaquette de coupe (1) située partiellement ou totalement sur le côté, près de l'encoche (9).

15. Alésoir selon une des revendications précédentes, **caractérisé en ce que** la plaquette de coupe (1) est réalisée par frittage.

16. Alésoir selon les revendications 1 à 14, **caractérisé en ce que** la plaquette de coupe (1) est réalisée par érosion.
